# EUROPÄISCHE PATENTSCHRIFT

(11) **EP 2 250 869 B1**
(45) Veröffentlichungstag und Bekanntmachung des Hinweises auf die Patenterteilung: **29.02.2012**
(21) Anmeldenummer: 10159739.1
(22) Anmeldetag: 13.04.2010
(51) Int. Cl.: A01D 41/12, A01F 12/40

(54) **Erntegutrestehäcksel und -verteilanordnung für einen Mähdrescher**
Harvested goods remnant shredder and distribution assembly for a combine harvester
Agencement de hachage et de répartition de résidus de produits de récolte pour une moissonneuse-batteuse

(30) Priorität: 20.08.2009 DE 102009028765; 14.05.2009 DE 102009003124
(43) Veröffentlichungstag der Anmeldung: 17.11.2010
(73) Patentinhaber: DEERE & COMPANY, Moline, Illinois 61265-8098 (US)
(72) Erfinder: Klein, Oliver, 55740, Saarlouis (DE); Weichholdt, Dirk, 57200, Woelfing Les Sarreguemines (DE); Pfeiffer, Dohn W, 66440, Mimbach (DE); Pohlmann, Norbert, 66482, Zweibrücken (DE); Lauer, Fritz, 66894, Krähenberg (DE); Priesnitz, Rico, 66822, Lebach (DE)
(74) Vertreter: Holst, Sönke

(56) Entgegenhaltungen:
- EP-A1- 1 532 858
- EP-A1- 2 138 024
- US-A1- 2007 015 556

## Beschreibung

Die Erfindung betrifft eine Erntegutrestehäcksel- und -verteilanordnung für einen Mähdrescher.

### Stand der Technik

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Das ausgedroschene Stroh wird in der Regel entweder gehäckselt und über die Schneidwerksbreite auf dem Feld verteilt oder um den Strohhäcksler herum geleitet und in nicht gehäckselter Form in einem Schwad auf dem Feld abgelegt, um es später mit eine Ballenpresse aufnehmen zu können. Die am rückwärtigen Auslass der Reinigungseinrichtung verbleibenden Erntegutreste, wie Kaff und kleine Strohteile, werden durch einen Kaffstreuer auf dem Feld verteilt oder durch den Strohhäcksler geleitet und auf dem Feld verteilt.

Die DE 199 08 111 C1 beschreibt einen Mähdrescher mit einem Strohhäcksler und zwei seitlich nebeneinander angeordneten, dem Strohhäcksler folgenden Wurfgebläsen zum breit verteilten Austragen des Strohs über das Feld. Der Auslass des Strohhäckslers und der Einlass der in einem Gehäuse angeordneten Wurfgebläse, die um eine etwa senkrechte Achse rotierende Wurfpaddel umfassen, sind zu Zwecken einer richtungsänderungslosen Gutübergabe in einer Ebene angeordnet. Um die Wurfgebläse herum sind Ummantelungen angebracht, die sich zwischen den Wurfgebläsen in einer vorderen, dem Strohhäcksler zugewandten Spitze vereinigen. Im rückwärtigen Bereich sind die Ummantelungen ausgebrochen, um das Stroh auf das Feld abzugeben. Die mit ihren Vorderseiten nach innen drehenden Wurfgebläse ragen seitlich über den Strohhäcksler hinaus, wobei sich ihre Drehachsen jeweils in der Nähe eines äußeren Endes des Strohhäckslers befinden.

Die EP 1 532 858 A1 zeigt einen Mähdrescher, der ebenfalls mit einem Strohhäcksler und zwei seitlich nebeneinander angeordneten Wurfgebläsen ausgestattet ist, deren Gehäuse in eine dem Strohhäcksler zugewandte Spitze ausläuft.

Die eine dem Strohhäcksler zugewandte, vordere Spitze bildenden Ummantelungen sind in einem relativ großen Abstand vom Hüllkreis der Häckselmesser des Strohhäckslers angeordnet. Insbesondere bei relativ feuchten Erntegutresten sammeln sich diese daher an der Vorderseite der Spitze der Ummantelungen an, was zu unerwünschten Verstopfungen führen kann.

In der nachveröffentlichten EP 2 138 024 A1 wird ein Mähdrescher mit einem Strohhäcksler und zwei Wurfgebläsen beschrieben, deren Gehäuse in eine vordere Spitze ausläuft, die in einem Abstand maximal 10 mm vom Hüllkreis der Messer der Strohhäcksler positioniert ist, um die sich dort ansammelnden Erntegutreste abzufördern. Bei einer anderen Ausführungsform taucht die Spitze in den Hüllkreis der Messer ein. Der Strohhäcksler ist innerhalb eines Gehäuses mit einem konkaven Boden angeordnet, der am Auslass des Strohhäckslers endet und an den sich kein Erntegutresteführungselement anschließt.

### Aufgabe der Erfindung

Die der Erfindung zu Grunde liegende Aufgabe wird darin gesehen, eine Emtegutrestehäcksel- und -verteilanordnung mit einem Strohhäcksler und zwei stromab des Strohhäckslers angeordneten Wurfgebläsen für einen Mähdrescher bereitzustellen, bei der die Neigung zu Verstopfungen an der Spitze des den Emtegutstrom zwischen den Wurfgebläsen aufteilenden Leitelements vermindert und bei der Funktion der Aufteilung der Emtegutströme auf die Wurfgebläse durch das Leitelement verbessert ist.

### Lösung

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Eine Erntegutrestehäcksel- und -verteilanordnung für einen Mähdrescher umfasst einen Strohhäcksler und zwei bezüglich der Gutflussrichtung stromab des Strohhäckslers angeordnete Wurfgebläse. Im Emtebetrieb zerkleinert der Strohhäcksler ihm zugeführte Erntegutreste, insbesondere Stroh. Er kann mit seinen Messern und ggf. zusätzlichen Förderpaddeln auch andere Emtegutreste fördern, beispielsweise Kaff, sei es gemeinsam mit dem Stroh im Häckselbetrieb oder wahlweise in einer Strohschwadablagebetriebsart, in dem das Stroh am Strohhäcksler vorbeigeführt wird, nur diese Erntegutreste. Die vom Strohhäcksler heran geförderten Emtegutreste werden durch die zwei Wurfgebläse angenommen und über das Feld verteilt. Dazu rotieren die Wurfgebläse gegensinnig, wobei die dem Strohhäcksler zugewandten Bereiche der Wurfgebläse aufeinander zu drehen. Das in Vorwärtsrichtung linke Wurfgebläse rotiert, wenn man es von oben betrachtet, demnach im Uhrzeigersinn, während das in Vorwärtsrichtung rechte Wurfgebläse, von oben her betrachtet, im Gegenuhrzeigersinn rotiert. Zwischen dem Auslass des mit einem konkaven Boden ausgestatteten Strohhäckslergehäuse und dem Wurfgebläse ist ein Erntegutresteführungselement angebracht, das als reines Führungselement ausgebildet sein kann und den Erntegutrestestrom nicht ablenkt, oder ihn in einer gewünschten Richtung ablenkt, wie sie insbesondere in der WO 2008/156419 A1 beschrieben wird. Zwischen den Wurfgebläsen ist ein Leitelement angebracht, das den Erntegutrestestrom im Bereich zwischen den Wurfgebläsen führt. Das Leitelement umfasst eine dem Strohhäcksler zugewandte, vordere Spitze, die derart gegenüber dem Hüllkreis der Häckselmesser positioniert ist, dass die Häckselmesser Emtegutreste von der Spitze entfernen.

Die Spitze des Leitelements schließt sich mit einem geringen Spalt außerhalb des Hüllkreises der Häckselmesser daran an, wobei ihre Form kreisbogenförmig an den Hüllkreis der Häckselmesser angepasst ist. Alternativ taucht die Spitze des Leitelements in den Hüllkreis der Häckselmesser des Strohhäckslers ein, insbesondere zwischen zwei benachbarten, gemeinsam pendelnd an einem Rotor des Strohhäckslers aufgehängten Häckselmessern.

Auf diese Weise werden unerwünschte Erntegutansammlungen an der Spitze vermieden und, da die Aufteilung der Emtegutströme an einer Stelle erfolgt, an der die Emtegutreste aktiv gefördert werden, auch die Aufteilung der Emtegutströme auf die beiden Wurfgebläse verbessert. Die Spitze arbeitet wie ein Gegenmesser, um die ordnungsgemäße Aufteilung der Erntegutströme zu gewährleisten.

An der Spitze des Leitelements kann eine Schneide vorgesehen sein, um die Reibung des Emteguts an der Spitze und die Abnutzung der Spitze zu vermindern. Betrachtet man einen Querschnitt durch die Spitze, kann sich die Schneide mittig oder außenseitig an der Schneide befinden. Vorzugsweise wird die Schneide an einem Messer angebracht, das abnehmbar am Leitelement befestigt ist.

Hinsichtlich der relativen Anordnung von Strohhäcksler und Wurfgebläse zueinander bestehen im Rahmen des erfindungsgemäßen Gedankens unterschiedliche Möglichkeiten. So kann der Strohhäcksler das Wurfgebläse in exakt radialer Richtung beaufschlagen (vgl. DE 199 08 111 C1) oder den radial äußeren Rand des Wurfgebläses unter einem spitzen oder stumpfen Winkel (s. US 2007/0015556 A1) oder die Emtegutreste werden dem Wurfgebläse in axialer Richtung unter einem spitzen oder stumpfen Winkel, mit (s. WO 2008/156419 A1) oder ohne (s. DE 10 2007 037 485 B3) Umlenkung der Erntegutreste stromab des Strohhäckslers durch ein Ablenkelement zugeführt.

Insbesondere läuft der Erntegutrestestrom in Vorwärtsrichtung vor den Drehachsen der Wurfgebläse ein, wobei keine unterschiedliche Ablenkung in einem äußeren bzw. inneren Bereich erfolgt.

### Ausführungsbeispiel

Anhand der Abbildungen werden mehrere Ausführungsbeispiele der Erfindung erläutert. Es zeigt:
- Fig. 1: eine teilgeschnittene seitliche Ansicht eines Mähdreschers mit einem Strohhäcksler und Wurfgebläsen,
- Fig. 2: eine vergrößerte seitliche Ansicht des Strohhäckslers und eines Wurfgebläses mit einer ersten Ausführungsform eines dazwischen angeordneten Leitelements,
- Fig. 3: eine Draufsicht auf den Strohhäcksler und die Wurfgebläse,
- Fig. 4: eine perspektivische Ansicht eines Erntegutresteführungselements mit dem daran befestigten Leitelement,
- Fig. 5: eine gegenüber der Figur 2 weiter vergrößerte seitliche Ansicht des Strohhäckslers und des Wurfgebläses mit einer zweiten Ausführungsform eines dazwischen angeordneten Leitelements,
- Fig. 6: eine Draufsicht auf ein Häckselmesserpaar des Strohhäckslers und das Leitelement aus Figur 5,
- Fig. 7: einen Querschnitt durch eine andere Ausführungsform einer Spitze des Leitelements,
- Fig. 8: eine seitliche Ansicht einer dritten Ausführungsform eines Leitelements,
- Fig. 9: eine seitliche Ansicht einer vierten Ausführungsform eines Leitelements,
- Fig. 10: eine seitliche Ansicht einer fünften Ausführungsform eines Leitelements, und
- Fig. 11: eine Draufsicht auf die Wurfgebläse analog Figur 3, jedoch mit einer anderen Ausführungsform eines Führungselements.

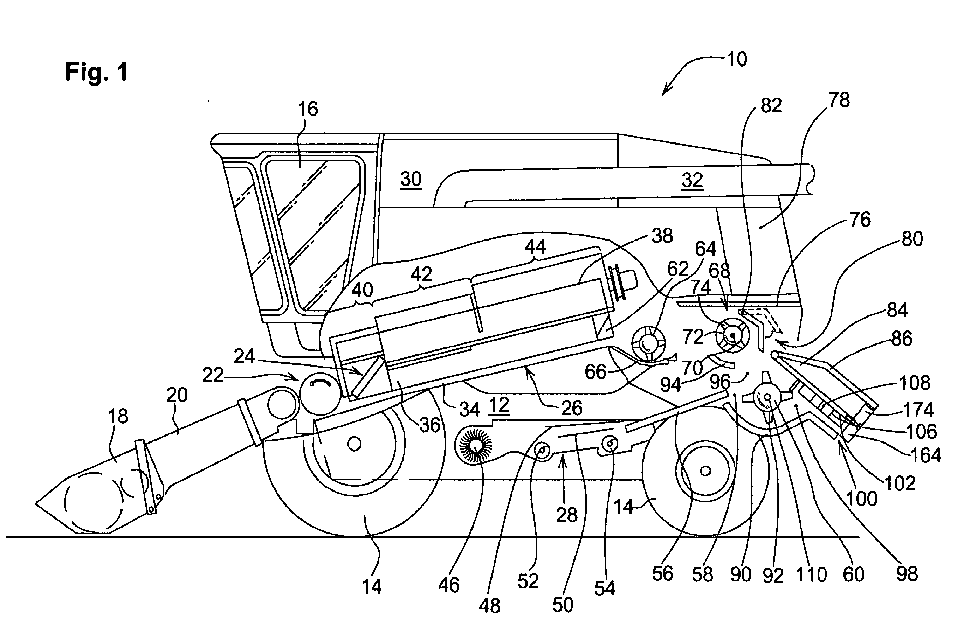

Die Figur 1 zeigt einen landwirtschaftlichen Mähdrescher 10 mit einem Fahrgestell 12 mit im Eingriff mit dem Boden befindlichen Rädern 14, die am Fahrgestell 12 befestigt sind und zum Vortrieb des Mähdreschers 10 in einer Vorwärtsrichtung dienen, die in der Figur 1 nach links verläuft. Der Betrieb des Mähdreschers 10 wird von der Bedienerkabine 16 aus kontrolliert. Ein Schneidwerk 18 wird verwendet, um Korn enthaltendes Erntegut zu ernten und es einem Schrägförderer 20 zuzuführen. Das geerntete Gut wird durch den Schrägförderer 20 einer Leittrommel 22 zugeführt. Die Leittrommel 22 leitet das Erntegut durch einen Einlassübergangsabschnitt 24 zu einer axialen Erntegutbearbeitungseinrichtung 26. Im Folgenden beziehen sich Richtungsangaben, wie vom und hinten, auf die Vorwärtsrichtung des Mähdreschers 10, die in der Figur 1 nach links verläuft.

Die Emtegutbearbeitungseinrichtung 26 umfasst ein Rotorgehäuse 34 und einen darin angeordneten Rotor 36. Der Rotor 36 umfasst eine hohle Trommel 38, an der Gutbearbeitungselemente für einen Beschickungsabschnitt 40, einen Dreschabschnitt 42 und einen Trennabschnitt 44 befestigt sind. Der Beschickungsabschnitt 40 ist an der Vorderseite der axialen Emtegutbearbeitungseinrichtung 26 angeordnet. In Längsrichtung stromab und rückwärtig des Beschickungsabschnitts 40 liegen der Dreschabschnitt 42 und der Trennabschnitt 44. Die Trommel 38 ist im Beschickungsabschnitt 40 kegelstumpfförmig. Der Dreschabschnitt 42 umfasst einen kegelstumpfförmigen vorderen Abschnitt und einen zylindrischen rückwärtigen Abschnitt. Am Ende der axialen Emtegutbearbeitungseinheit 26 befindet sich der zylindrische Trennabschnitt 44 der Trommel 38. Anstelle einer axialen Erntegutbearbeitungseinheit 26 können auch eine tangentiale Dreschtrommel und eine ihr folgende axiale Trenneinrichtung oder ihr folgende Strohschüttler verwendet werden.

Korn und Spreu, die durch einen dem Dreschabschnitt 42 zugeordneten Dreschkorb und ein dem Trennabschnitt 44 zugeordneten Trennrost fallen, werden einem Reinigungssystem 28 mit einem Gebläse 46 und in eine Schwingbewegung versetzbaren Lamellensieben 48, 50 zugeführt. Das Reinigungssystem 28 entfernt die Spreu und führt das saubere Korn über einen Schneckenförderer 52 einem Elevator für sauberes Korn (nicht gezeigt) zu. Der Elevator für sauberes Korn legt das saubere Korn in einem Korntank 30 ab. Das saubere Korn im Korntank 30 kann durch einen Entladeschneckenförderer 32 auf einen Komwagen, Anhänger oder Lastwagen entladen werden. Am rückwärtigen Ende des unteren Lamellensiebs 50 verbleibendes Erntegut wird mittels eines Schneckenförderers 54 und eines Überkehrförderers (nicht gezeigt) wieder der Emtegutbearbeitungseinrichtung 26 zugeführt. Die am rückwärtigen Ende des oberen Lamellensiebs 48 abgegebenen Erntegutreste, die im Wesentlichen aus Kaff (Spreu) und kleinen Strohteilchen bestehen, werden durch einen Schwingbodenförderer 56 nach hinten in einen Einlass 58 eines Strohhäckslers 60 gefördert.

Gedroschenes, den Trennabschnitt 44 verlassendes Stroh wird durch einen Auslass 62 aus der Emtegutbearbeitungseinrichtung 26 ausgestoßen und einer Auswurftrommel 64 zugeführt. Die mit einem darunter angeordneten Boden 66 zusammenwirkende Auswurftrommel 64 wirft das Stroh nach hinten aus. Rückwärtig der Auswurftrommel 64 und etwa in vertikaler Höhe ihrer Drehachse befindet sich ein weiterer Förderer in Form eines oberschlächtig arbeitenden Trommelförderers 68. Der Trommelförderer 68 erstreckt sich horizontal und quer zur Vorwärtsrichtung und ist durch einen geeigneten Antrieb um seine Achse 70, an der er drehbar am Fahrgestell 12 befestigt ist, in eine Drehrichtung in Drehung versetzbar, in der er oberschlächfig arbeitet und in der Figur 1 im Uhrzeigersinn dreht, wie durch den Pfeil angedeutet. Zum Antrieb des Trommelförderers 68 wird in der Regel ein Hydraulikmotor verwendet. Der Trommelförderer 68 entspricht in seinem Aufbau der Auswurftrommel 64 und umfasst einen rotationssymmetrischen Mantel 72 mit um seinen Umfang verteilten, starr daran angebrachten Mitnehmern 74. Unterhalb des Trommelförderers 68 ist eine Wanne 94 angeordnet.

Oberhalb der Auswurftrommel 64 und des Trommelförderers 68 ist eine sich horizontal und in Vorwärtsrichtung erstreckende obere Wand 76 angebracht, die einen darüber befindlichen Motorraum 78 nach unten abschließt. An der Wand 76 ist eine Klappe 80 an ihrem vorderen, dem Trommelförderer 68 benachbarten Ende um eine sich horizontal und quer zur Vorwärtsrichtung erstreckende Achse 82 zwischen einer Schwadablageposition und einer Häckselposition verschwenkbar angelenkt. Die Klappe 80 ist in sich konkav gekrümmt, wobei der Radius an den Trommelförderer 68 angepasst ist.

Unterhalb des unteren und rückwärtigen Endes der Klappe 80 schließt sich (bei in der Häckselstellung befindlicher Klappe 80) lückenlos ein mit dem Fahrgestell 12 fest verbundenes Blech 84 an, das sich schräg nach hinten und unten erstreckt und mit einer sich daran anschließenden Rutsche 86 verbunden ist, auf der das Stroh im Schwadablagebetrieb nach unten auf den Feldboden gleiten kann. Das Strohschwad kann noch durch an der Oberseite der Rutsche 86 angebrachte Leitkufen oder Strohleitrechen (nicht gezeigt) in eine gewünschte Form gebracht werden.

Die Klappe 80 ist um die Achse 82 zwischen der Häckselposition, in der sie in der Figur 1 mit durchgezogenen Linien dargestellt ist, und einer Schwadablageposition verschwenkbar, in der die Klappe 80 in der Figur mit gestrichelten Linien dargestellt ist und sie sich oberhalb des Strohflusses nach hinten erstreckt.

Unterhalb des Blechs 84 befindet sich der Strohhäcksler 60, der sich aus einem Strohhäckslergehäuse 90 und einem darin angeordneten, um eine quer zur Vorwärtsrichtung und horizontal verlaufende Achse drehbaren Rotor 92 mit um den Umfang des Rotors 92 verteilten, pendelnd aufgehängten Häckselmessern 96 zusammensetzt. Am Rotor 92 können auch zusätzliche Wurfpaddelpaddel (nicht gezeigt) befestigt werden, oder einige oder alle Häckselmesser 96 umfassen Wurfpaddel zur Luftförderung. Stromab eines Auslasses 98 des Strohhäckslers 60 ist sind zwei seitlich nebeneinander unterhalb der Rutsche 86 angeordnete Wurfgebläse 100 vorgesehen, von denen in der Figur 1 nur ein einziges erkennbar ist. Die Wurfgebläse 100 umfassen eine Anzahl an Wurfpaddeln 102, die jeweils durch jeweils einen Hydraulikmotor 106 um ihre (sich etwa vertikal erstreckenden, jedoch leicht nach hinten und oben geneigten) Drehachsen 108 in Drehung versetzbar sind, und denen der Strohhäcksler 60 die Emtegutreste in axialer Richtung unter einem stumpfen Winkel gegenüber den Drehachsen der Wurfgebläse 100 von unten her zuführt.

Die Drehachse 110 des Rotors 92 des Strohhäckslers 60 erstreckt sich horizontal und quer zur Vorwärtsrichtung. Die Wurfgebläse 100 sind seitlich nebeneinander rückwärtig des Strohhäckslers 60 angeordnet. Die Wurfgebläse 100 befinden sich innerhalb der Breite des Strohhäckslers 60. Die Wurfgebläse 100 sind durch Halterungen (nicht gezeigt) am dem Rahmen 12 des Mähdreschers 10 und/oder an der Rutsche 86 befestigt. Es wäre auch möglich, den Strohhäcksler 60 und die Wurfgebläse 100 derart anzuordnen, dass der Strohhäcksler 60 die Wurfgebläse 100 von oben her beaufschlagt. Bei einer anderen Ausführungsform sind die Drehachsen 108 der Wurfgebläse 100 horizontal oder genau vertikal.

In der Schwadablageposition der Klappe 80 fördert der Strohhäcksler 60 nur die Erntegutreste aus dem Reinigungssystem 28 zu den Wurfgebläsen 100, welche sie etwa über die Breite des Schneidwerks 18 auf dem Feldboden verteilen. Im Häckselbetrieb zerkleinert der Strohhäcksler 60 auch das Stroh auf dem Auslass 62 der Erntegutbearbeitungseinrichtung 26, das durch die Auswurftrommel 64 und den Trommelförderer 68 gegen die Klappe 80 geworfen wird und dann nach unten in den Einlass 58 des Strohhäckslers 60 fällt.

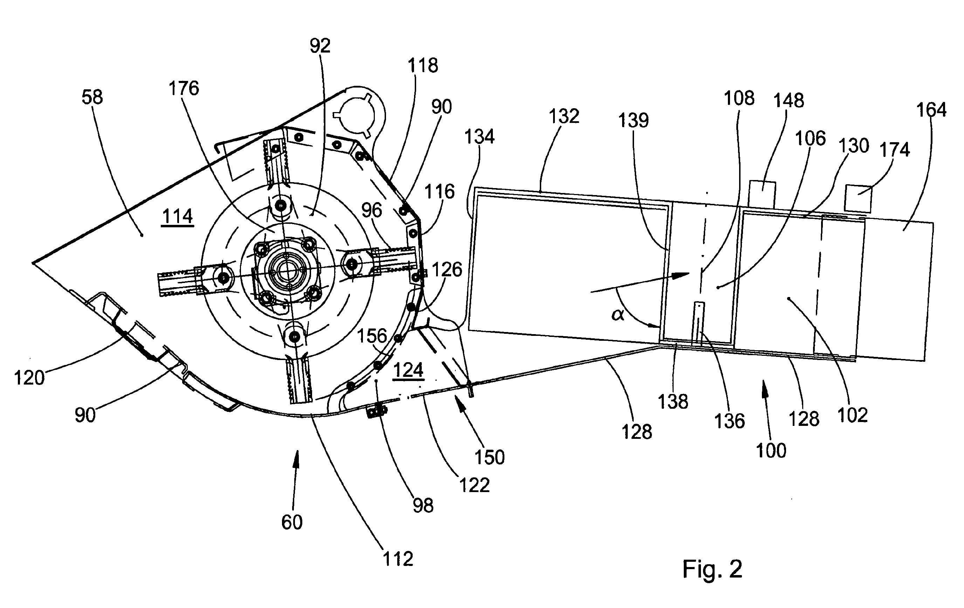

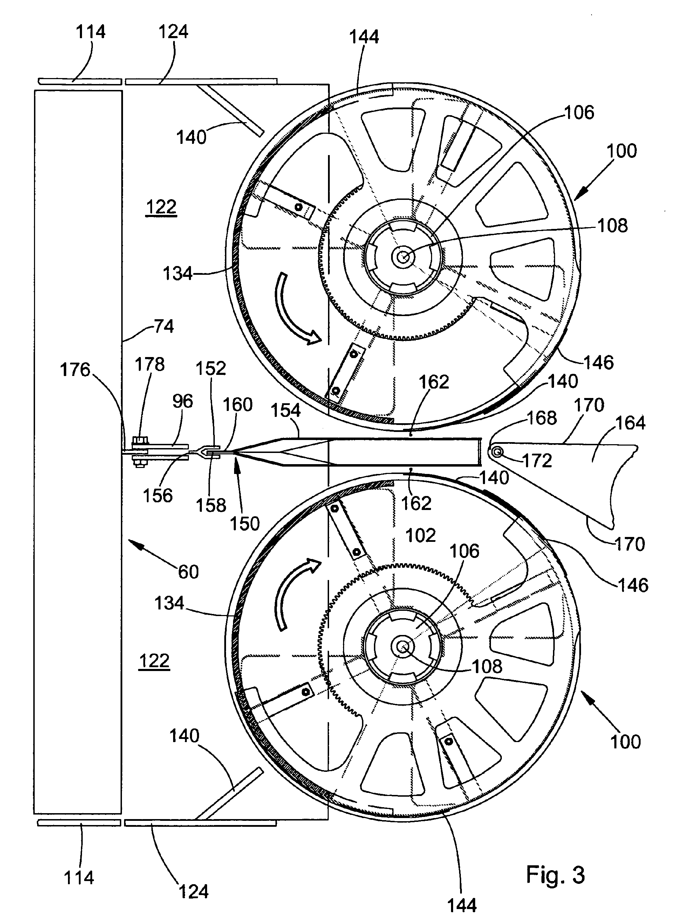

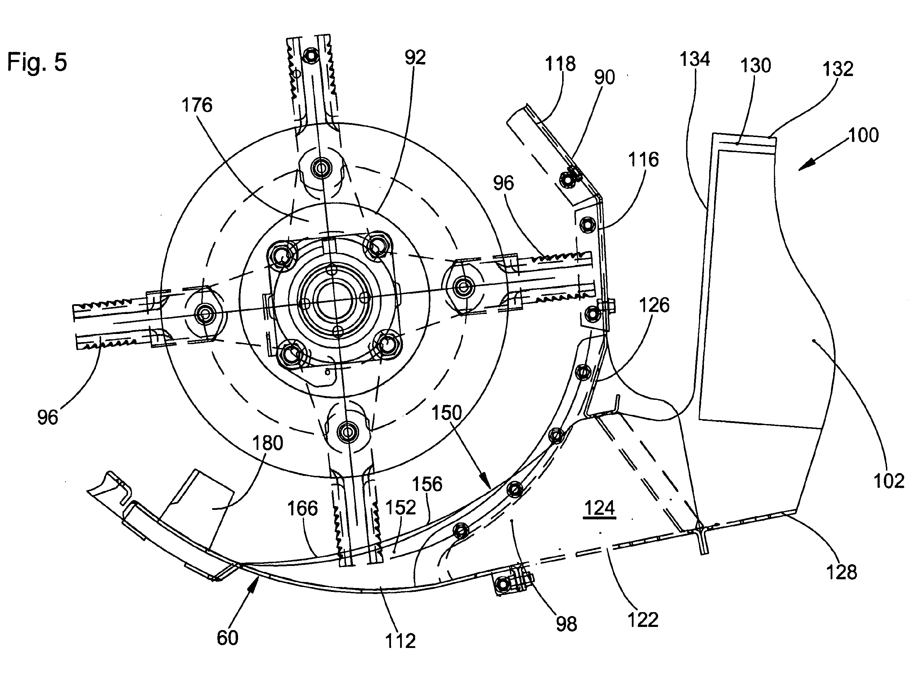

Es wird nun auf die Figuren 2 und 3 verwiesen, in welcher die Emtegutrestehäcksel- und -verteilanordnung des Mähdreschers 10 in einer Seitenansicht (Figur 2) und einer Draufsicht (Figur 3) dargestellt ist. Die Emtegutrestehäcksel- und -verteilanordnung umfasst den Strohhäcksler 60 und die Wurfgebläse 100. Das Strohhäckslergehäuse 90 umfasst einen Boden 112, zwei Seitenwände 114 und weitere Querbleche 116, 118, 120, die wie der Boden 112 die Seitenwände 114 untereinander verbinden und den Rotor 74 umschließen. Der Boden 112 ist an der Unterseite des Strohhäckslergehäuses 90 angeordnet und umschließt den von den Häckselmessern 96 definierten Hüllkreis kreisbogenförmig in einem relativ geringen Abstand mit einem Radius. Es können auch Gegenmesser (180, vgl. Figur 5) vorgesehen sein, die am Strohhäckslergehäuse 90 befestigt werden und in den Hüllkreis der Häckselmesser 96 eindringen, um die Erntegutreste effektiv zu zerkleinern.

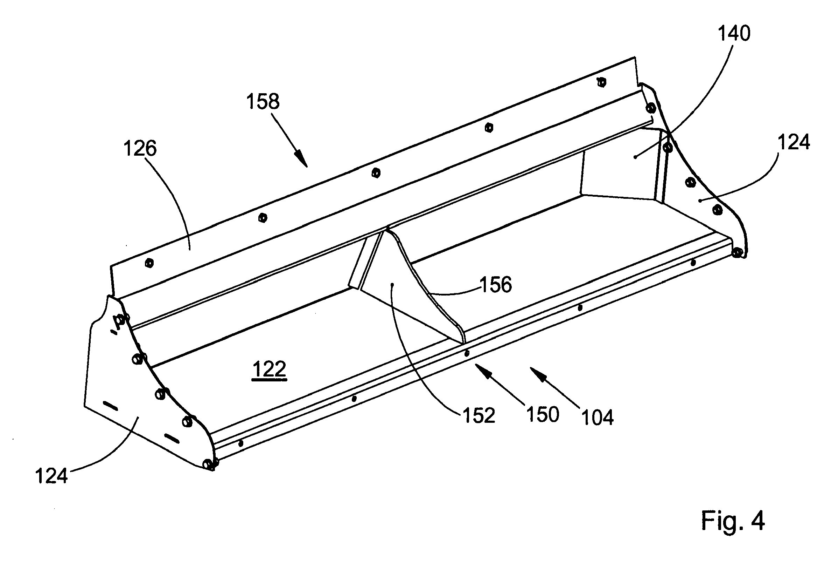

An den Boden 112 schließt sich in der Flussrichtung der Emtegutreste ein Erntegutresteführungselement 122 an, das in der Figur 4 in einer perspektivischen Ansicht dargestellt ist. Das Erntegutresteführungselement 122 ist zwischen Seitenwandverlängerungen 124 angeordnet, die mit je einer Seitenwand 114 des Strohhäckslergehäuses 90 durch Schraubverbindungen verbunden sind und sich dazu parallel erstrecken. Das Erntegutresteführungselement 122 ist in sich eben (hat demnach einen Radius von ∞). Das Erntegutresteführungselement 122 ist an seinem vorderen Ende nach unten abgewinkelt, um einen Flansch zu bilden, der mit einem ebenfalls nach unten abgewinkelten Flansch an der Rückseite des Bodens 112 verschraubt ist. Durch diese Verbindung vermeidet man überstehende Kanten, an denen sich Emtegutreste ansammeln könnten. An der Oberseite der Seitenwandverlängerungen 124 ist ein Querblech 126 angebracht, das den Auslass 98 des Strohhäckslers 60 nach oben hin begrenzt. Nach oben hin schließt sich an das Querblech 126 ein Querblech 116 des Strohhäckslergehäuses 90 an. Es sei noch angemerkt, dass das Erntegutresteführungselement 122 einteilig mit dem Boden 112 hergestellt werden könnte, wie auch die Seitenwandverlängerungen 124 einteilig mit den Seitenwänden 114 hergestellt werden könnten.

An den Seitenwandverlängerungen 124 (s. Figur 4) sind äußere Leitelemente 140 befestigt, die sich unter einem Winkel von etwa 45° nach innen und hinten erstrecken. Sie sind in der Draufsicht rechteckig und können über ihre ganze Länge oder nur in ihrem vorderen Bereich, der sich an einen mit der Seitenwandverlängerung 124 verbundenen, parallel zu ihr erstreckenden Bereich anschließt, gekrümmt sein. In vertikaler Richtung sind die äußeren Leitelemente 140 flach. Es wäre auch möglich, die äußeren Leitelemente 140 zusätzlich oder ausschließlich am Erntegutresteführungselement 122 zu befestigen. Auch könnten sie in der Art eines Pflugschars oder einer Kufe geformt sein.

An der Unterseite der Wurfgebläse 100 ist ein abgewinkeltes Bodenblech 128 angeordnet, das sich von einer Position kurz vor den Drehachsen bis an das rückwärtige Ende der Wurfgebläse erstreckt. Das Bodenblech 128 weist einen vorderen Abschnitt auf, der sich in der Ebene des Erntegutresteführungselements 122 erstreckt und mit einem nach unten abgewinkelten Flansch an einem nach unten abgewinkelten Flansch des Erntegutresteführungselements 122 anliegt. Diese Flansche können miteinander verschraubt werden oder nur aneinander anliegen, um die Wurfgebläse 100 leichter getrennt vom Strohhäcksler 60 in eine Transportposition verbringen zu können. Der vordere Abschnitt des Bodenblechs 128 erstreckt sich vom besagten Flansch bis kurz vor die Drehachse 108 der Wurfgebläse 100 und geht dort in einen rückwärtigen Abschnitt über, der sich bis unter das rückwärtige Ende der Wurfgebläse 100 und orthogonal zur Drehachse 108 erstreckt.

Die unten liegenden Ausgangswellen 136 der am Deckel 132 befestigten Hydromotoren 106 treiben die Wurfpaddel 102 über eine Querverbindung 138 und eine zylindrische Welle 139 an, die an ihrem oberen Ende an einem Teller 130 mit einer mittleren Öffnung befestigt ist. Die Wurfpaddel 102 der Wurfgebläse 100 erstrecken sich jeweils genau über die axiale Abmessung der Welle 139. Die Wurfpaddel 102 liegen mit ihren Oberseiten am Teller 130 an oder sind daran befestigt (z. B. angeschweißt). Oberhalb des Tellers 130 befindet sich ein Deckel 132, der die Wurfgebläse 100 nach oben hin abdeckt, und an dessen Vorderseite zwei jeweils ein Wurfgebläse 100 halbkreisförmig nach vorn radial umschließende Teilummantelungen 134 angeordnet sind. Weitere Teilummantelungen 140 schließen sich an den benachbarten Innenseiten der Wurfgebläse 100 an, wobei zwischen den Teilummantelungen 134 und den Teilummantelungen 140 noch Lücken 142 verbleiben.

Zwischen den beiden Wurfgebläsen 100 befindet sich ein zweiteiliges Leitelement 150, das einen vorderen Teil 152 und einen rückwärtigen Teil 154 umfasst. Der vordere Teil 152 ist am Erntegutresteführungselement 122 befestigt und mit seiner vorderen Spitze 156 an den Hüllkreis der Häckselmesser 96 angepasst, so dass er über seine dem Hüllkreis der Häckselmesser 96 benachbarte Spitze 156 kreisbogenförmig ausgeformt ist und diese Spitze 165 in einem relativ geringen Abstand außerhalb des Hüllkreises der Häckselmesser 96 angeordnet ist, so dass die Häckselmesser 96 verhindern, dass sich Emtegutreste an der Spitze 156 ansammeln, indem sie es kontinuierlich abfördern. An seiner Rückseite bildet der vordere Teil 152 einen Schlitz 158, in der ein flaches, vorderes Blech 160 des rückwärtigen Teils 154 eindringt. Rückwärtig des vorderen Blechs 160 verbreitert sich der rückwärtige Teil 154 und ist in sich hohl. Der rückwärtige Teil 154 ist an der Unterseite des Deckels 132 und an der Oberseite des Bodenblechs 128 befestigt, welche mit den Teilummantelungen 134, 140 und den Abschirmungen 144, 146 ein Wurfgebläsegehäuse bilden.

Anhand der Figur 3 ist erkennbar, dass zwischen dem Leitelement 150 und den ihm benachbarten Teilummantelungen 134, 140 der Wurfgebläse 80 jeweils Durchlässe 162 vorhanden sind, durch die ein im mittleren Bereich des Strohhäckslers 60 abgegebener Teil des Emtegutrestestroms vom Strohhäcksler 60 nach hinten hindurch bis auf das Feld strömen kann.

Rückwärtig des rückwärtigen Teils 154 des Leitelements 150 ist ein bewegliches Führungselement 164 vorgesehen mit einer vorderen Spitze 168, die sich rückwärtig der Drehachsen 108 der Wurfgebläse 100 in deren Zwickelbereich befindet, und zwei divergierenden, seitlichen, geraden Wänden 170, die jeweils einem Wurfgebläse 100 benachbart angeordnet sind. Das bewegliche Führungselement 164 ist um eine vom liegende Achse 172, die sich parallel zur Drehachse 108 der Wurfgebläse 100 erstreckt, durch einen oberhalb des Deckels 132 rückwärtig der Hydraulikmotoren 106 angebrachten Antrieb 174 in eine Schwingbewegung versetzbar. Hierzu wird auf die DE 10 2007 037 485 B3 und die DE 10 2008 055 003 A1 verwiesen, deren Offenbarung durch Verweis mit in die vorliegenden Unterlagen aufgenommen wird.

Die Teilummantelungen 140 sind mit einem höheren, rückwärtigen Abschnitt und einem niedrigeren, vorderen Abschnitt ausgestattet, zwischen denen ein schräg ansteigender Bereich vorgesehen ist. Die Teilummantelungen 140 können an ihren rückwärtigen Enden wahlweise um kürzere oder längere Winkelbereiche verlängert werden, indem erste und zweite Abschirmungen 144, 146 mit unterschiedlichen Abmessungen in Umfangsrichtung mittels eines manuell durch den Bediener aus der Kabine 16 oder selbsttätig abhängig von der Stellung der Klappe 68 kontrollierten Verstellantriebs 148 an den rückwärtigen Enden der Teilummantelungen 140 positioniert werden, um die Erntegutreste mehr oder weniger weit nach außen abzulenken, indem sie die Wurfgebläse 100 abdecken und die freie Abgabe der Erntegutreste radial nach außen verhindern, so dass die Erntegutreste die Wurfgebläse 100 erst verlassen können, nachdem sie an den Abschirmungen 144 oder 146 vorbei gelangt sind. Dadurch kann im Schwadablagebetrieb durch Verbringen der ersten, längeren Abschirmung 144 an das rückwärtige, innere Ende der Teilummantelung 140 erreicht werden, dass das Kaff seitlich neben dem Schwad abgelegt wird, oder im Strohhäckselbetrieb werden die Erntegutreste gleichmäßig über das Feld verteilt, indem die zweiten, kürzere Abschirmung 146 an das rückwärtige, innere Ende der Teilummantelung 140 verbracht wird. Außerdem können die Abschirmungen 144, 146 beider Wurfgebläse 80 unabhängig voneinander verstellt werden, um Seitenwind- und/oder -hangeinflüsse auszugleichen.

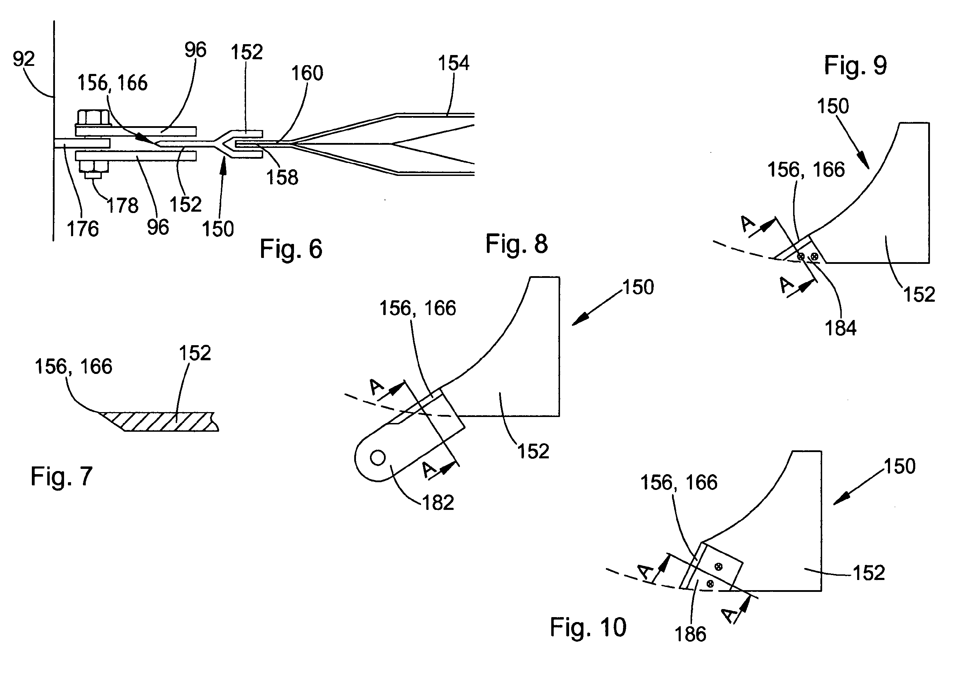

In den Figuren 5 und 6 ist eine zweite Ausführungsform des vorderen Teils 152 eines Leitelements 150 dargestellt, bei dem die Spitze 156 im Unterschied zur ersten Ausführungsform nach den Figuren 2 bis 4 in den Hüllkreis der Häckselmesser 96 eintaucht. Der vordere Teil 152 mit der Spitze 156 dringt somit in den Zwischenraum zwischen zwei benachbarten, durch eine Schraube 178 gemeinsam an einer Konsole 176 befestigten Häckselmessern 96 ein. An der Spitze 156 ist weiterhin eine zur Längsmittelebene des vorderen Teils symmetrische Schneide 166 angeordnet. Die Schneide 166 könnte auch durch die Ausführungsform gemäß Figur 7 ersetzt werden, bei der sich die Schneide 166 Spitze außenseitig an der Spitze 156 befindet. Schneiden 166 gemäß der Figuren 6 oder 7 können auch bei der ersten Ausführungsform nach den Figuren 2 bis 4 verwendet werden.

Bei der in Figur 5 gezeigten Ausführungsform erstreckt sich die Spitze 156 mit der Schneide 166 vom Boden 112 in einem relativ spitzen Winkel zum Hüllkreis der Häckselmesser 96 nach hinten und oben bis zum Querblech 126. Es sind nur näherungsweise die vorderen beiden Drittel der Spitze 156 mit einer Schneide 166 ausgestattet, da in diesem Bereich fast alle Emtegutreste daran vorbeilaufen, während im oberen, rückwärtigen Bereich der Spitze 156 relativ wenig Erntegutreste vorhanden und auf die beiden Wurfgebläse 100 aufzuteilen sind, so dass sich eine dort angebrachte Schneide 166 erübrigt.

Die Ausführungsformen nach den Figuren 8 bis 10 weisen im Unterschied zur Ausführungsform nach den Figuren 5 und 6 separate, austauschbare Messer 182, 184, 186 auf, die die Spitze 156 mit der Schneide 166 bilden. Die Messer 182, 184, 186 sind am vorderen Teil 152 des Leitelements 150 (Messer 184, 186 gemäß der Figuren 9 und 10) oder mit einer geeigneten Halterung unterhalb des Bodens 112 des Strohhäckslers 60 durch Schraubverbindungen verbunden (Messer 182 nach Figur 8), die am Boden 112 oder dem vorderen Teil 152 des Leitelements 150 angebracht sein kann.

Die Querschnitte durch die Messer 182, 184, 186 entlang der Linien A-A können dem Querschnitt der Figur 7 oder dem der Figur 6 entsprechen. Bei der Ausführungsform nach Figur 8 ist das Messer 182 ein Häckselmesser 96 für einen Strohhäcksler 60, dessen Schneide 166 mit oder ohne Verzahnung ausgestattet sein kann. Bei der Ausführungsform nach Figur 9 ist das Messer 184 ein Häckselmesser für die Häckseltrommel eines Feldhäckslers, dessen Schneide 166 ebenfalls mit oder ohne Verzahnung ausgestattet sein kann. Bei der Ausführungsform nach Figur 10 ist das Messer 186 eine dreieckige Messerklinge für ein Schneidwerk (beispielsweise den Erntevorsatz 18), dessen Schneide 166 ebenfalls mit oder ohne Verzahnung ausgestattet sein kann. Die Schneiden 166 können in einem relativ spitzen Winkel zum einlaufenden Erntegutrestestrom angestellt sein, wie in den Figuren 5, 8 und 9 gezeigt, oder in einem stumpfen Winkel, wie in der Figur 10 dargestellt. Auch bei den Ausführungsformen nach den Figuren 8 bis 10 erstreckt sich die Schneide 166 nur über einen äußeren Teil der Länge der Spitze 156, der dem Boden 112 des Strohhäckslergehäuses 90 benachbart ist.

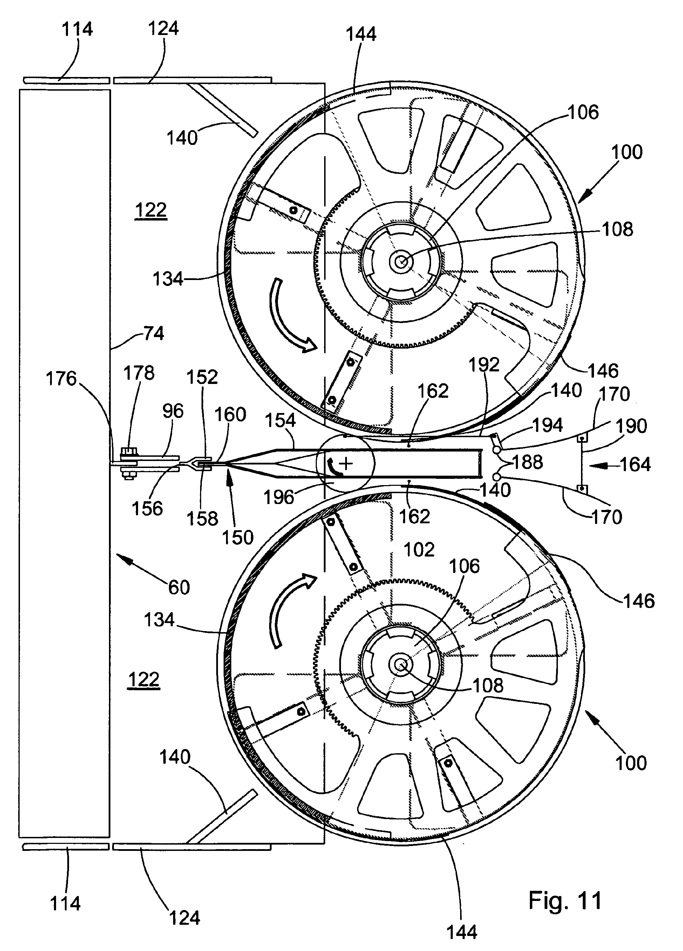

Schließlich wird auf die Figur 11 verwiesen, die eine grundsätzlich der Ausführungsform nach den Figuren 2 bis 5 entsprechende Ausführungsform darstellt. Im Unterschied dazu ist das bewegliche Führungselement 164 aus zwei Wänden 170 aufgebaut, die getrennt voneinander unmittelbar rückwärtig des rückwärtigen Teils 154 des Leitelements 150 um Schwenkachsen 188 schwenkbar gelagert sind. Die Schwenkachsen 188 erstrecken sich parallel zu den Drehachsen der Wurfgebläse 100. Die Wände 170 sind jeweils konkav gekrümmt mit einem Durchmesser, der etwa dem Durchmesser der Wurfgebläse 100 bzw. dem Durchmesser der Leitelemente 140 entspricht. Die Wände 170 sind untereinander durch eine Koppelstange 190 verbunden, die an beiden Wänden 170 angelenkt ist. Eine Kurbelstange 192 verbindet einen mit einer der Wände 170 verbundenen Zapfen 194, der mit der Wand 170 um die Schwenkachse 188 rotiert, mit einem durch den Antrieb 174 in Drehung versetzbaren Antriebsrad 196. Die Kurbelstange 192 ist exzentrisch gegenüber dem Drehpunkt des Antriebsrades 196 angelenkt. Die Funktion des Führungselements 164 in Figur 11 entspricht jener des Führungselements 164 der Figur 3.

## Patentansprüche

1. Erntegutrestehäcksel- und -verteilanordnung mit einem mit Häckselmessern (96) ausgestatteten Strohhäcksler (60) und zwei stromab des Strohhäckslers (60) seitlich nebeneinander angeordneten Wurfgebläsen (100), die im Betrieb gegensinnig und mit ihren dem Strohhäcksler (60) zugewandten Bereichen aufeinander zu bewegend rotieren und zwischen denen ein eine dem Strohhäcksler (60) zugewandte Spitze (156) umfassendes Leitelement (150) angeordnet ist, wobei der Strohhäcksler (60) innerhalb eines Strohhäckslergehäuses (90) mit einem konkaven Boden (112) angeordnet ist und zwischen dem Boden (112) des Strohhäckslergehäuses (90) und den Wurfgebläsen (100) ein flaches, den Erntegutstrom ablenkendes oder nicht ablenkendes Erntegutresteführungselement (122) positioniert ist, **dadurch gekennzeichnet, dass** die Form der Spitze (156) des Leitelements (150) kreisbogenförmig an den Hüllkreis der Häckselmesser (96) des Strohhäckslers (60) angepasst ist und sich außerhalb des Hüllkreises der Häckselmesser (96) mit einem kleinen Spalt daran anschmiegt oder dass die Spitze (156) des Leitelements (150) in den Hüllkreis der Häckselmesser (96) des Strohhäckslers 60 eintaucht, so dass die Hȧckselmesser (96) im Betrieb Erntegutreste von der Spitze (156) entfernen.

2. Erntegutrestehäcksel- und -verteilanordnung nach Anspruch 1, **dadurch gekennzeichnet, dass** die Spitze (156) des Leitelements (150) zwischen zwei benachbarten, gemeinsam pendelnd an einem Rotor (92) des Strohhäckslers (60) aufgehängten Häckselmessern (96) in den Hüllkreis der Häckselmesser (96) des Strohhäckslers (60) eintaucht.

3. Emtegutrestehäcksel- und -verteilanordnung nach einem der Ansprüche 1 bis 2,
**dadurch gekennzeichnet, dass** an der Spitze (156) des Leitelements (150) eine Schneide (166) vorgesehen ist.

4. Erntegutrestehäcksel- und -verteilanordnung nach Anspruch 3, **dadurch gekennzeichnet, dass** die Schneide (166) sich bezüglich eines Querschnitts durch die Spitze (156) mittig oder außenseitig an der Schneide (166) befindet.

5. Erntegutrestehäcksel- und -verteilanordnung nach Anspruch 3 oder 4, **dadurch gekennzeichnet, dass** die Schneide (166) an einem Messer (182, 184, 186) angebracht ist, das abnehmbar am Leitelement (150) befestigt ist.

6. Erntegutrestehäcksel- und -verteilanordnung nach einem der Ansprüche 3 bis 5,
**dadurch gekennzeichnet, dass** die Schneide (166) sich nur über einen äußeren Teil der Länge der Spitze (156) erstreckt.

7. Erntegutrestehäcksel- und -verteilanordnung nach einem der Ansprüche 1 bis 6,
**dadurch gekennzeichnet, dass** die Spitze (156) und/oder eine daran angebrachte Schneide (166) in einem stumpfen oder spitzen Winkel zum einlaufenden Erntegutrestestrom angeordnet sind.

8. Erntegutrestehäcksel- und -verteilanordnung nach einem der Ansprüche 1 bis 7,
**dadurch gekennzeichnet, dass** der Strohhäcksler (60) derart angeordnet ist, dass er das Wurfgebläse (100) im Betrieb in axialer Richtung unter einem Winkel (α) beaufschlagt.

9. Erntegutrestehäcksel- und -verteilanordnung nach einem der Ansprüche 1 bis 8,
**dadurch gekennzeichnet, dass** der Erntegutrestestrom in Vorwärtsrichtung vor den Drehachsen (108) der Wurfgebläse (100) einläuft.

10. Mähdrescher (10) mit einer Emtegutrestehäcksel- und -verteilanordnung nach einem der Ansprüche 1 bis 9.

## Claims

1. Crop residue chopping and distributing arrangement with a straw chopper (60) provided with chopping blades (96), and two ejector blowers (100) which are arranged laterally next to each other downstream of the straw chopper (60), rotate in opposite directions during operation and, with the regions thereof facing the straw chopper (60), such that they move towards each other, and between which a directing element (150) comprising a tip (156) facing the straw chopper (60) is arranged, wherein the straw chopper (60) is arranged within a straw chopping housing (90) having a concave floor (112), and a flat crop residue guiding element (122) which deflects or does not deflect the stream of crop is positioned between the floor (112) of the straw chopper housing (90) and the ejector blowers (100), **characterized in that** the shape of the tip (156) of the directing element (150) is matched in the shape of a circular arc to the enveloping circle of the chopping blades (96) of the straw chopper (60) and, outside the enveloping circle of the chopping blades (96), is in close contact with the latter with a small gap, or **in that** the tip (156) of the directing element (150) dips into the enveloping circle of the chopping blades (96) of the straw chopper (60) such that, during operation, the chopping blades (96) remove crop residues from the tip (156).

2. Crop residue chopping and distributing arrangement according to Claim 1, **characterized in that** the tip (156) of the directing element (150) dips into the enveloping circle of the chopping blades (96) of the straw chopper (60) between two adjacent chopping blades (96) which are suspended in a jointly oscillating manner on a rotor (92) of the straw chopper (60).

3. Crop residue chopping and distributing arrangement according to either of Claims 1 and 2, **characterized in that** a cutting edge (166) is provided on the tip (156) of the directing element (150).

4. Crop residue chopping and distributing arrangement according to Claim 3, **characterized in that** the cutting edge (166) is located centrally on or on the outside of the tip (156) with respect to a cross section through the tip (156).

5. Crop residue chopping and distributing arrangement according to Claim 3 or 4, **characterized in that** the cutting edge (166) is attached to a blade (182, 184, 186) which is fastened detachably to the directing element (150).

6. Crop residue chopping and distributing arrangement according to one of Claims 3 to 5, **characterized in that** the cutting edge (166) extends only over an outer part of the length of the tip (156).

7. Crop residue chopping and distributing arrangement according to one of Claims 1 to 6, **characterized in that** the tip (156) and/or a cutting edge (166) attached thereto are/is arranged at an obtuse or an acute angle to the incoming stream of crop residue.

8. Crop residue chopping and distributing arrangement according to one of Claims 1 to 7, **characterized in that** the straw chopper (60) is arranged in such a manner that, during operation, said straw chopper acts on the ejector blower (100) at an angle (α) in the axial direction.

9. Crop residue chopping and distributing arrangement according to one of Claims 1 to 8, **characterized in that** the stream of crop residue enters in the forwards direction upstream of the axes of rotation (108) of the ejector blowers (100).

10. Combine harvester (10) with a crop residue chopping and distributing arrangement according to one of Claims 1 to 9.

## Revendications

1. Agencement de hachage et de répartition de résidus de récolte comprenant un hache-paille (60) muni de couteaux de hachage (96) et deux soufflantes de dispersion (100) disposées latéralement l'une à côté de l'autre en aval du hache-paille (60), qui tournent en sens inverse pendant le fonctionnement en se déplaçant l'une vers l'autre avec leurs régions tournées vers le hache-paille (60) et entre lesquelles est disposé un élément conducteur (150) comprenant une pointe (156) tournée vers le hache-paille (60), le hache-paille (60) étant disposé à l'intérieur d'un boîtier de hache-paille (90) ayant un fond concave (112) et entre le fond (112) du boîtier de hache-paille (90) et les soufflantes de dispersion (100) étant positionné un élément de guidage de résidus de récolte plat (122) déviant ou ne déviant pas le flux de produits de récolte, **caractérisé en ce que** la forme de la pointe (156) de l'élément conducteur (150) est adaptée en forme d'arc de cercle au cercle d'enveloppe des couteaux de hachage (96) du hache-paille (60), et s'applique étroitement contre celui-ci avec une petite fente en dehors du cercle d'enveloppe des couteaux de hachage (96), ou **en ce que** la pointe (156) de l'élément conducteur (150) plonge dans le cercle d'enveloppe des couteaux de hachage (96) du hache-paille (60) de telle sorte que les couteaux de hachage (96) pendant le fonctionnement enlèvent les résidus de récolte de la pointe (156).

2. Agencement de hachage et de répartition de résidus de récolte selon la revendication 1, **caractérisé en ce que** la pointe (156) de l'élément conducteur (150) plonge entre deux couteaux de hachage (96) adjacents, suspendus ensemble de manière pendulaire à un rotor (92) du hache-paille (60) dans le cercle d'enveloppe des couteaux de hachage (96) du hache-paille (60).

3. Agencement de hachage et de répartition de résidus de récolte selon la revendication 1 ou 2, **caractérisé en ce qu'**une arête de coupe (166) est prévue au niveau de la pointe (156) de l'élément conducteur (150).

4. Agencement de hachage et de répartition de résidus de récolte selon la revendication 3, **caractérisé en ce que** l'arête de coupe (166) se trouve par rapport à une section transversale à travers la pointe (156) centralement ou du côté extérieur sur l'arête de coupe (166).

5. Agencement de hachage et de répartition de résidus de récolte selon la revendication 3 ou 4, **caractérisé en ce que** l'arête de coupe (166) est montée sur un couteau (182, 184, 186) qui est fixé de manière amovible sur l'élément conducteur (150).

6. Agencement de hachage et de répartition de résidus de récolte selon l'une quelconque des revendications 3 à 5, **caractérisé en ce que** l'arête de coupe (166) s'étend uniquement sur une partie extérieure de la longueur de la pointe (156).

7. Agencement de hachage et de répartition de résidus de récolte selon l'une quelconque des revendications 1 à 6, **caractérisé en ce que** la pointe (156) et/ou une arête de coupe (166) montée sur celle-ci sont disposée suivant un angle obtus ou aigu par rapport au flux de résidus de récolte entrant.

8. Agencement de hachage et de répartition de résidus de récolte selon l'une quelconque des revendications 1 à 7, **caractérisé en ce que** le hache-paille (60) est disposé de telle sorte qu'il sollicite la soufflante de dispersion (100) pendant le fonctionnement dans la direction axiale suivant un angle (α).

9. Agencement de hachage et de répartition de résidus de récolte selon l'une quelconque des revendications 1 à 8, **caractérisé en ce que** le flux de résidus de récolte entre dans la direction d'avance avant les axes de rotation (108) de la soufflante de dispersion (100).

10. Moissonneuse-batteuse (10) comprenant un agencement de hachage et de répartition de résidus de récolte selon l'une quelconque des revendications 1 à 9.
